# EUROPÄISCHE PATENTSCHRIFT

(11) **EP 1 107 823 B1**
(45) Veröffentlichungstag und Bekanntmachung des Hinweises auf die Patenterteilung: **27.02.2002**
(21) Anmeldenummer: 99940073.2
(22) Anmeldetag: 29.07.1999
(51) Int. Cl.: B01J 2/00, A61J 3/00, A61K 9/28, A23P 1/08, B01F 9/10, A23G 3/26

(54) **VERFAHREN ZUM BEHANDELN EINES PARTIKELFÖRMIGEN GUTS MIT EINEM ÜBERZUGSMEDIUM SOWIE VORRICHTUNG ZUR DURCHFÜHRUNG EINES DERARTIGEN VERFAHRENS**
METHOD FOR TREATING A PARTICULATE MATERIAL WITH A COATING SUBSTANCE AND DEVICE FOR IMPLEMENTING SUCH A METHOD
PROCEDE DE TRAITEMENT D'UN PRODUIT PARTICULAIRE A L'AIDE D'UNE SUBSTANCE DE REVETEMENT ET DISPOSITIF DE MISE EN OEUVRE DUDIT PROCEDE

(30) Priorität: 25.08.1998 DE 19838540
(43) Veröffentlichungstag der Anmeldung: 20.06.2001
(73) Patentinhaber: Hüttlin, Herbert, 79539 Lörrach (DE)
(72) Erfinder: Hüttlin, Herbert, 79539 Lörrach (DE)
(74) Vertreter: Heuckeroth, Volker, Dr.
(86) Internationale Anmeldenummer: EP9905423
(87) Internationale Veröffentlichungsnummer: WO0010699

(56) Entgegenhaltungen:
- CH-A- 670 053
- CH-A- 673 962
- DE-A- 4 128 258
- US-A- 1 605 025
- US-A- 5 284 678
- US-A- 5 507 871
- US-A- 5 582 643

## Beschreibung

Die Erfindung betrifft ein Verfahren zum Behandeln eines partikelförmigen Guts mit einem Überzugsmedium, insbesondere zum Dragieren oder Filmbeschichten von Arznei- oder Lebensmittelformlingen, wobei das Gut in einen Behälter eingefüllt, in dem Behälter durch Rotieren des Behälters bewegt und mit dem Überzugsmedium besprüht und das aufgesprühte Überzugsmedium mittels Prozeßluft getrocknet wird.

Die Erfindung betrifft ferner eine Vorrichtung zur Durchführung eines derartigen Verfahrens, mit einem um einen Drehachse in Rotation antreibbaren Behälter, einer Sprüheinrichtung zum Besprühen des Guts mit dem Überzugsmedium, und mit einer Zuführeinrichtung zum Zuführen von Prozeßluft.

Ein derartiges Verfahren sowie eine derartige Vorrichtung ist aus der DE-AS 1 198 187 bekannt.

Ein solches Verfahren und eine solche Vorrichtung werden in der pharmazeutischen, chemischen, Süßwaren- und Lebensmittelindustrie verwendet. In der pharmazeutischen Industrie werden durch Dragieren Arzneiformen hergestellt, die mit einem Zuckersirup überzogen sind. Durch Filmbeschichten, oder auch Filmcoating genannt, werden Film- oder Lacktabletten hergestellt, worunter man mit einem Polymer überzogene Arzneiformen versteht.

Die vorliegende Erfindung ist jedoch nicht auf das Dragieren oder Filmbeschichten beschränkt, sondern läßt sich bspw. auch bei der Granulierung anwenden, bei dem feinere Partikel mit dem Überzugsmedium beschichtet werden, um die Partikel miteinander zu agglomerieren.

Beim Dragieren werden Formlinge mittels einer meist klebrigen Suspension oder Lösung beschichtet. Bei herkömmlichen Verfahren wird das zu beschichtende partikelförmige Gut in einen rotierenden Behälter bewegt, wobei das Überzugsmedium, d.h. die klebrige Suspension zyklisch auf das bewegte Gut aufgegossen wird. In weiteren Einzelzyklen folgt dann das Verteilen, bei dem die Suspension auf dem partikelförmigen Gut gleichmäßig verteilt wird, und anschließend wird das Überzugsmedium getrocknet. Diese Einzelzyklen beanspruchen jeweils eine Zeit von etwa 5 bis 10 Minuten. Nach dem Trocknen wird wieder aufgegossen, verteilt, getrocknet, etc.

Bei neueren Verfahren zum Dragieren wird das Überzugsmedium auf das in dem rotierenden Behälter bewegte partikelförmige Gut mittels eines Sprühdüsensystems aufgesprüht.

Beim Filmbeschichten wird das zu beschichtende Gut bei herkömmlichen Verfahren ebenfalls in einem rotierenden Behälter bewegt, mit dem Überzugsmedium, das beim Filmbeschichten in der Regel eine Lösung, Dispersion oder eine dickflüssige Suspension ist, mittels eines Sprühdüsensystems besprüht und getrocknet.

Die Qualität der fertigen Beschichtung des partikelförmigen Guts hängt sowohl beim Dragieren als auch beim Filmbeschichten von der gleichmäßigen, schnellen, jedoch schonenden Umwälzung des zu beschichtenden Gutes ab. Die Art der Umwälzung des zu beschichtenden Gutes in dem Behälter hat auch erheblichen Einfluß auf die mögliche Art der Applikation des Überzugsmediums und auf die Effektivität der Trocknung, wobei Applikation und Trocknung wiederum die Qualität der Beschichtung des fertig beschichteten Guts wesentlich mitbestimmen.

Aus der bereits genannten DE-AS 1 198 187 ist ein Drageekessel zur Herstellung von Dragees für die Süßwaren- und pharmazeutische Industrie bekannt, wobei in dem Drageekessel ein Polierarm angeordnet ist, der mit dem Öffnungsrand des Drageekessels verbunden ist oder über eine in der Antriebswelle des Drageekessels liegende Welle angetrieben wird. Der Drageekessel ist um eine unter einem Winkel zur vertikalen geneigten Drehachse drehbar.

Bei dem mit diesem bekannten Drageekessel durchgeführten Verfahren wird das zu beschichtende Gut demnach in einem Behälter bewegt, der um eine schräg gestellte Drehachse rotiert. Das partikelförmige Gut wird dabei infolge der Drehung des Behälters um seine Drehachse durch die mechanische Mitnahme des partikelförmigen Gutes an der rotierenden Wand des Behälters in sich umgewälzt, d.h. absteigende Schichten des Guts fließen auf an der rotierenden Wand aufsteigenden Schichten ab. Aufgrund der schräg gestellten Drehachse überlagern sich dabei eine horizontale Umwälzbewegung und schräg nach oben wirkende Zentrifugalkräfte. Nachteil dieser konventionellen Vorrichtungen ist ihre begrenzte Kapazität, da die schräg gestellte Drehachse nur eine bestimmte Belastung erlaubt. Außerdem ergeben sich bei der Chargenvergrößerung Unzulänglichkeiten bei der Prozeßluftzuführung zum Trocknen des Überzugs, da das als kompaktes Volumen umgewälzte Gut von der Prozeßluft nur oberflächlich überstrichen, jedoch nicht durchflutet werden kann.

Daher werden heutzutage fast ausschließlich solche Vorrichtungen eingesetzt, die einen Behälter aufweisen, der um eine horizontale Achse rotiert. Diese Vorrichtungen können mit größeren Chargen gefahren werden. Der Nachteil dieser Vorrichtungen mit um eine horizontale Drehachse rotierenden Behältern besteht jedoch darin, daß die Vermischung des partikelförmigen Gutes aufgrund der fehlenden Zentrifugalkräfte verschlechtert ist. Dieser Nachteil muß durch den Einbau von Mischschikanen oder Mischschaufeln kompensiert werden, die jedoch mechanische Hindernisse darstellen, die ein Aufreiben und damit eine Beschädigung der Formlinge begünstigen.

Eine solche Vorrichtung mit einem um eine horizontale Drehachse rotierenden Behälter ist aus der DE-Firmenschrift der Firma Glatt GmbH, Bühlmühle, "Glatt-Coater Typ GC400-2000", bekannt.

Eine Bewegung des partikelförmigen zu beschichtenden Guts in einem um eine horizontale Drehachse rotierenden Behälter ist auch hinsichtlich des Besprühens des Guts mit dem Überzugsmedium nachteilig. Das Besprühen bei den bekannten Verfahren und Vorrichtungen dieser Art geschieht entweder dadurch, daß das Überzugsmedium von oben auf das darunter umwälzende Gut aufgesprüht wird. Dieses sogenannte Top-Spray-Verfahren ist jedoch nachteilig, weil es zwangsläufig zu großen Sprühverlusten führt.

Um die Sprühverluste gering zu halten, wurde daher versucht, die Sprüheinrichtung in das umwälzende Gut einzutauchen. Bei den Vorrichtungen und Verfahren, bei denen das zu behandelnde Gut in einem um eine Horizontalachse drehenden Behälter bewegt wird, hat sich jedoch herausgestellt, daß die Bewegung des Guts durch die in das Gut eingetauchte Sprüheinrichtung negativ beeinflußt wird. Eine gleichmäßige Bewegung und Vermischung des partikelförmigen Guts ist nicht mehr gewährleistet. Da die in das Gut eingetauchte, feststehende, d.h. nicht mitdrehende Sprüheinrichtung ein mechanisches Hindernis bei der Bewegung des Guts darstellt, können die sich bewegenden Partikel des Guts infolge zu großer Reibung wiederum an diesen mechanischen Hindernissen beschädigt werden.

Ferner ist aus der DE-AS 1 938 797 eine Vorrichtung zum Beschichten von körnigem Material, wie Pillen, mit einem das körmige Material und das Beschichtungsmaterial aufnehmendem Behälter bekannt, wobei der Behälter durch eine um ihren Mittelpunkt drehbare Bodenschale und eine feststehende, mit ihrer Innenfläche an die Peripherie dieser Bodenschale glatt nach oben bogenförmig anschließenden Trommel gebildet ist. Gemäß dem beschriebenen Verfahren wird das zu beschichtende Material auf die Bodenschale aufgebracht und diese derart schnell gedreht, daß das körnige Material durch Zentrifugalkräfte längs der Innenfläche der Trommel nach oben und von dort aus wieder im Kreislauf zurück auf die Bodenschale bewegt wird und das Beschichtungsmaterial auf das so zirkulierende körnige Material aufgebracht wird und Trockenluft zwischen das körnige Material eingeblasen wird. Bei dieser bekannten Vorrichtung dreht sich nur der Boden des Behälters, während die Trommel an sich feststeht. Hieran ist als nachteilig anzusehen, daß die Bewegung und Durchmischung des partikelförmigen Gutes unzureichend ist. Außerdem fließt bei diesem bekannten Verfahren und der bekannten Vorrichtung das durch die Zentrifugalbewegung nach oben bewegte Gut im Gegenstrom zu den aufsteigenden Partikeln zurück. Durch die damit verbundenen Stöße zwischen den einzelnen Partikeln können diese, insbesondere im Fall von spröden körnigen Partikeln, beschädigt werden. Auch ist die Durchlüftung mit Prozeßluft bei dieser Art des Verfahrens nicht optimal.

Ferner ist aus der DE 27 50 696 A1 ein mehrstufiges Verfahren zum Aufbringen eines sprühfähigen Mittels auf ein Material aus losen Granulat-, Schuppen-, Span- oder Faserteilchen durch Sprühen eines Sprühmittels gegen die Innenseite eines aus frei oder mit zusätzlicher Beschleunigung herabfallenden Teilchen gebildeten, in Bezug auf eine geometrische Vertikalachse rotationssymmetrischen Schleiers, insbesondere zum Überziehen von Holzspänen mit einem sprühfähigen Bindemittel, bekannt. Bei diesem Verfahren werden die den Schleier bildenden Teilchen nach dem Durchlaufen der im direkten Sprühbereich liegenden Zone derart umgelenkt und von der geometrischen Achse des Teilchenschleiers in Form eines kreisringförmigen Fächers weggeschleudert, daß sie während dieser Schleuderbewegung der Wirkung des den Teilchenschleier durchdringenden Teils des Sprühstrahls ausgesetzt werden, worauf sie nach unten gelenkt und weiterbehandelt oder gesammelt und weggeführt werden.

Bei dieser bekannten Vorrichtung ist ein um eine vertikale Drehachse drehbarer Behälterzwischenboden vorgesehen, auf den die Späne von oben herabfallen, durch die Drehbewegung des Zwischenbodens nach außen geschleudert und von dort weiter nach unten fallen, wo sie aus dem Behälter herausfallen. Auch bei dieser Vorrichtung ist der Behälter selbst, d.h. genauer gesagt, die Behälterwand, feststehend ausgebildet.

Der Erfindung liegt daher die Aufgabe zugrunde, ein Verfahren und eine Vorrichtung der eingangs genannten Art dahingehend weiterzubilden, daß die vorstehend genannten Nachteile vermieden werden, daß das partikelförmige Gut mit dem Überzugsmedium gleichmäßig mit hoher Qualität behandelt werden kann.

Hinsichtlich des eingangs genannten Verfahrens wird diese Aufgabe erfindungsgemäß dadurch gelöst, daß das Gut in dem Behälter in einer fortlaufenden Umwälzbewegung entlang eines Bodens von einem durchmesserinneren in einen durchmesseräußeren Bereich des Behälters, von dort entlang einer hochstehenden Wand des Behälters von einem unteren in einen oberen Bereich des Behälters und von dort entlang einer schrägen Rückführungsfläche wieder zu dem durchmesserinneren Bereich des Bodens bewegt wird.

Hinsichtlich der eingangs genannten Vorrichtung wird diese Aufgabe erfindungsgemäß dadurch gelöst, daß der Behälter einen Boden und eine hochstehende Wand aufweist, daß die Drehachse des Behälters im wesentlichen vertikal steht, und daß in dem Behälter eine schräge Rückführungsfläche angeordnet ist, die sich von einem oberen Bereich des Behälters in Richtung eines durchmesserinneren Bereichs des Bodens erstreckt.

Das erfindungsgemäße Verfahren und die erfindungsgemäße Vorrichtung lösen sich von dem Konzept, das Gut in einem um eine Horizontalachse oder schräge Achse drehenden Behälter zu bewegen und dadurch zu mischen. Statt dessen ist erfindungsgemäß vorgesehen, das partikelförmige Gut in einem um eine vertikale Drehachse rotierenden Behälter zu bewegen. Dadurch wird der Vorteil erzielt, daß zum Bewegen des Guts Zentrifugalkräfte ausgenutzt werden, die das Gut in einer um die vertikale Drehachse des Behälters drehenden zentrifugal tangential schlingenden Bewegung, entlang des Bodens im wesentlichen horizontal oder nach außen abfallend und entlang der hochstehenden Wand des Behälters im wesentlichen vertikal umwälzen. Im oberen Bereich des Behälters wird die Bewegungsrichtung des Guts in eine Abwärtsbewegung entlang der Rückführungsfläche umgekehrt, wodurch bei dieser erfindungsgemäßen Art der Führung des Guts der entlang der Wand aufsteigende Teil des Guts von dem entlang der Rückführungsfläche abfließenden Teil des Guts separierte Massenflüsse bilden. Dadurch wird das Gut insgesamt in einer weniger kompakten Art und Weise bewegt, die eine effizientere Trocknung des Überzugsmediums ermöglicht. Ein weiterer Vorteil dieser erfindungsgemäßen Ausgestaltung besteht darin, daß der Bereich zwischen dem sich entlang des Bodens bewegenden Teils des Guts und dem sich entlang der Rückführungsfläche zurückbewegenden Teils des Guts ein Raum zur Verfügung steht, in dem sich eine Prozeßluftströmung und Prozeßluftdurchmischung zum Trocknen des Guts besonders gut ausbilden kann. Durch die Rückführungsfläche, die in dem Behälter feststehend, d.h. nicht mitdrehend, angeordnet sein kann, und auf der das partikelförmige Gut bevorzugt unter dem Einfluß der Schwerkraft abfließt, und durch die am Boden stets zentrifugal nach außen gerichtete Bewegung des Guts wird nun der weitere erhebliche Vorteil erzielt, daß die Sprüheinrichtung an einer besonders günstigen Stelle positioniert werden kann, bspw. im Zentrum des Behälters, ohne ein mechanisches Hindernis für die Bewegung des Guts darzustellen. Aufgrund der durch das erfindungsgemäße Verfahren und die erfindungsgemäße Vorrichtung wesentlich verbesserte schonende Durchmischung des Guts bei dessen Bewegung wird die Qualität des fertigen beschichteten Guts wesentlich verbessert.

Somit wird die der Erfindung zugrundeliegende Aufgabe vollkommen gelöst.

In einer bevorzugten Ausgestaltung des Verfahrens wird das in Bewegung befindliche Gut beim Abfließen des Guts von der Rückführungsfläche auf den Boden mit dem Überzugsmedium gesprüht.

In einer bevorzugten Ausgestaltung der Vorrichtung weist die Sprüheinrichtung dazu zumindest eine Sprühdüse auf, die in einem Bereich zwischen einem unteren Ende der Rückführungsfläche und dem Boden angeordnet ist.

Diese Maßnahme hat den Vorteil, daß das Besprühen des Guts an einer besonders günstigen Stelle erfolgt, an der das beim Abfließen an der Sprühdüse vorbeilaufende Gut mit sehr hoher Gleichmäßigkeit besprüht werden kann. Der weitere Vorteil besteht darin, daß das Gut an einem durchmesserinneren Bereich über dem Boden besprüht werden kann, wo das Gut mit höherer Dichte an der Sprühdüse vorbeigeführt wird, so daß Sprühverluste minimiert sind.

In einer weiteren bevorzugten Ausgestaltung des Verfahrens wird das Überzugsmedium ringförmig radial nach außen gerichtet auf das Gut gesprüht.

In einer weiteren bevorzugten Ausgestaltung der Vorrichtung ist die Sprühdüse eine radial ringförmig abstrahlende Sprühdüse, insbesondere eine Mehrstoffdüse.

Diese Maßnahme hat nun den besonderen Vorteil, daß das vom unteren Ende der Rückführungsfläche abfließende Gut voll umfänglich gleichmäßig besprüht werden kann. Der weitere Vorteil dieser Maßnahme besteht darin, daß das radial abgesprühte Überzugsmedium die radial nach außen gerichtete Bewegung des Guts entlang des Bodens beim Besprühen unterstützen kann. Dieser Effekt kann bei Verwendung einer Mehrstoffdüse durch die mit dem Überzugsmedium aus der Düse austretende Stützluft noch verstärkt werden.

In einer weiteren bevorzugten Ausgestaltung des Verfahrens wird das Gut entlang des Bodens mit einer im Vergleich zur Bewegung entlang der Wand unterschiedlichen Geschwindigkeit bewegt.

In einer weiteren bevorzugten Ausgestaltung der Vorrichtung ist der Boden des Behälters mit der Wand außer Kontakt bringbar und mit von der Drehzahl der Wand unabhängiger Drehzahl in Rotation antreibbar.

Diese Maßnahme hat nun den Vorteil, daß zwischen dem Boden und der Wand des Behälters eine Relativdrehgeschwindigkeit eingestellt werden kann, die im Übergangsbereich zwischen dem durchmesseräußeren Bereich des Bodens und dem unteren Bereich der Wand zusätzlich eine Misch- und Schlingbewegung des Guts bewirkt. Der Boden und die Wand des Behälters könner. zur Erhöhung dieses Effektes sogar gegenläufig angetrieben werden. Durch die Schlingbewegung des Guts im Übergangsbereich zwischen dem Boden und der Wand kann die Verweilzeit in diesem Bereich erhöht werden, wodurch sich dieser Bereich besonders als aktive Trocknungszone zum Trocknen des Überzugsmediums eignet.

In einer weiteren bevorzugten Ausgestaltung des Verfahrens wird die Prozeßluft durch das Gut geleitet, während dieses entlang des Bodens bewegt wird.

In einer weiteren bevorzugten Ausgestaltung der Vorrichtung weist die Zuführeinrichtung für die Prozeßluft dazu einen Zuführkanal auf, der unter dem Boden mündet, und ist der Boden in seinem durchmesserinneren und/oder durchmesseräußeren Bereich prozeßluftdurchlässig.

Hierbei ist von Vorteil, daß insbesondere in Verbindung mit der zuvor erwähnten etwa mittig im unteren Bereich des Behälters erfolgenden Besprühung des Guts eine sich unmittelbar an das Besprühen erfolgende effektive Trocknung durch Durchfluten des Guts ermöglicht wird. Das Trocknen erfolgt somit in einem Bereich des Behälters, in dem das Gut infolge seiner zentrifugalen Bewegung eine aufgelockerte Masse abnehmender Partikeldichte bildet, so daß das Gut besonders effektiv von der Prozeßluft durchströmt werden kann. Andererseits kann die durch den Boden zugeführte Prozeßluft auf dem Boden ein Luftkissen bilden, auf dem das Gut unter verminderter Reibung entlang des Bodens radial nach außen drehend bewegt werden kann. Im einfachsten Fall kann der Boden durch Perforierungen prozeßluftdurchlässig ausgestaltet werden.

In einer weiteren bevorzugten Ausgestaltung des Verfahrens wird die Prozeßluft mit radial nach außen gerichteter Komponente durch das Gut geleitet.

In einer weiteren bevorzugten Ausgestaltung der Vorrichtung ist der Boden dazu aus einer im wesentlichen konzentrischen Anordnung mehrerer übereinanderliegender Ringe unterschiedlicher Durchmesser gebildet, wobei sich jeweils benachbarte Ringe teilweise vertikal beabstandet überlappen, und wobei der Durchmesser der Ringe von unten nach oben abnimmt.

Diese Maßnahme hat nun den Vorteil, daß die durch den Boden zugeführte Prozeßluft nicht nur ein Luftkissen bilden kann, sondern daß die radial nach außen gerichtete Prozeßluftsströmung die radiale und drehende Bewegung des Guts entlang des Bodens unterstützt.

In einer weiteren bevorzugten Ausgestaltung des Verfahrens wird die Prozeßluft durch das Gut geleitet, während dieses entlang der Wand des Behälters bewegt wird.

In einer weiteren bevorzugten Ausgestaltung der Vorrichtung ist die Wand zumindest im unteren Bereich prozeßluftdurchlässig.

Diese Maßnahme hat nun den Vorteil, daß das Gut auch beim Aufsteigen entlang der Wand von der Prozeßluft durchflutet wird, wodurch die Trocknung noch effektiver wird.

In einer weiteren bevorzugten Ausgestaltung des Verfahrens wird die Prozeßluft ausschließlich durch das entlang der Wand bewegte Gut geleitet, ohne daß das entlang des Bodens bewegte Gut von der Prozeßluft durchströmt wird.

In einer weiteren bevorzugten Ausgestaltung der Vorrichtung weist die Zuführeinrichtung einen Zuführkanal auf, der seitlich des Bodens im Bereich der Wand mündet, wobei die Wand in diesem Bereich prozeßluftdurchlässig ist.

Diese Maßnahme ist nun insbesondere beim Dragieren von Vorteil, da das im mittigen Bereich des Behälters beim Abfließen von der Rückführungsfläche besprühte Gut zunächst ohne Trocknungsprozeß entlang des Bodens bewegt wird, wodurch sich das aufgesprühte Überzugsmedium auf den Partikeln des Guts während der Bewegung entlang des Bodens durch Walkeinwirkung gleichmäßig verteilen kann und somit ein Überzug gleichmäßiger Schichtdicke erreicht wird.

In einer weiteren bevorzugten Ausgestaltung des Verfahrens wird die Prozeßluft auch durch das entlang der Rückführungsfläche zurückbewegte Gut geleitet.

In einer weiteren bevorzugten Ausgestaltung der Vorrichtung ist die Rückführungsfläche prozeßluftdurchlässig.

Durch diese Maßnahme wird die Effektivität der Trocknung weiter verbessert, da das partikelförmige Gut nach dem Besprühen mit dem Überzugsmedium in der Art einer Zweiphasentrocknung zweimal von der Prozeßluft durchflutet wird, nämlich ein erstes Mal auf dem Boden, sofern der Boden prozeßluftdurchlässig ist, zumindest jedoch ein erstes Mal beim Aufsteigen entlang der Wand und ein zweites Mal beim Abfließen entlang der Rückführungsfläche.

Dabei ist es hinsichtlich des Verfahrens bevorzugt, wenn die Prozeßluft vor dem Durchströmen des sich zum Boden zurückbewegenden Guts erwärmt wird.

Hinsichtlich der Vorrichtung ist es dabei bevorzugt, wenn unter der Rückführungsfläche eine Heizung zum Erwärmen der Prozeßluft angeordnet ist.

Hierbei ist von Vorteil, daß die Prozeßluft, die bereits das Gut am Boden und/oder an der Wand durchflutet hat und dadurch Feuchtigkeit von dem Überzugsmedium aufgenommen hat, durch das Erwärmen eine erhöhte Feuchtigkeitsaufnahmefähigkeit erhält. Dadurch wird eine Rückbefeuchtung des Guts während des Abfließens auf der Rückführungsfläche vermieden und statt dessen eine effektivere Trocknung des Überzugsmediums erreicht.

In einer weiteren bevorzugten Ausgestaltung des Verfahrens wird das Gut aus der Drehbewegung heraus entleert.

Diese Maßnahme hat den Vorteil, daß das Gut des Behälters nach Beendigung des Behandlungsvorganges automatisch aus dem Behälter abgeführt werden kann.

In einer weiteren bevorzugten Ausgestaltung der Vorrichtung ist ein oberer Rand der Wand des Behälters radial nach innen gekrümmt.

Diese Maßnahme hat den Vorteil, daß das Produkt durch eine konstruktiv einfache Maßnahme an dem radial nach innen abgekrümmten Rand der Wand des Behälters eine Bewegungsrichtungsänderung und Führung zur Rückführungsfläche hin erfährt.

In einer weiteren bevorzugten Ausgestaltung der Vorrichtung ist innerhalb des Behälters in dessen oberem Umfangsbereich ein Führungsringkörper angeordnet, der mit der Wand des Behälters von dieser radial beabstandet verbunden ist, so daß zwischen dem Führungsringkörper und dem oberen Umfangsbereich der Wand ein radial nach innen abgekrümmter Durchtrittsspalt für das sich bewegende Gut gebildet wird.

Diese Maßnahme hat den Vorteil, daß das Gut in einer vorgegebenen Schichtdicke zwischen dem Führungsringkörper und dem oberen radial nach innen abgekrümmten Rand der Wand des Behälters in Richtung der Rückführungsfläche austreten kann, und somit mit einer definierten Partikeldichte dazu auf der Rückführungsfläche und anschließend an der Sprühdüse vorbei abfließen kann. Der Schub des entlang der Wand nach oben nachfließenden zentrifugal bewegten Guts sorgt für einen ausreichenden Austrittsschub des Guts durch den Durchtrittsspalt.

In einer weiteren bevorzugten Ausgestaltung der Vorrichtung ist der Führungsringkörper mit der Wand des Behälters mittels mehrerer Leitschaufeln verbunden, wobei die Leitschaufeln in Drehrichtung gesehen von unten nach oben rückwärts gekrümmt sind.

Diese Maßnahme hat den Vorteil, daß die Leitschaufeln im oberen Bereich des Behälters eine weitere Durchmischung des Guts ermöglichen, bevor das Gut auf die Rückführungsfläche fällt. Die Leitschaufeln ermöglichen des weiteren in Verbindung mit dem zuvor erwähnten Entleeren des Guts aus der Drehbewegung heraus eine automatische Beförderung des Guts aus dem Behälter heraus.

In einer weiteren bevorzugten Ausgestaltung der Vorrichtung ist über dem Behälter ein den Rand des Behälters radial nach innen überragender feststehender auf dem Rand der Wand gleitender Abschlußring angeordnet.

Dieser Abschlußring ist insbesondere in Verbindung mit den zuvor genannten Leitschaufeln von Vorteil, da die Leitschaufeln das Gut gegen den feststehenden Abschlußring lenken, wodurch das Gut eine Abbremsung erfährt, die das Herunterfallen des Guts auf die Rückführungsfläche begünstigt.

In einer weiteren bevorzugten Ausgestaltung der Vorrichtung ist eine Entleerungseinrichtung zum Entleeren des Behälters vorgesehen, die einen den Behälter umgebenden Ringraum aufweist, in dem eine den Behälter wendelartig umgebende Rinne angeordnet ist, deren oberes Ende im Bereich des Randes der Wand des Behälters angeordnet ist.

Durch diese Ausgestaltung der Entleerungsrichtung wird auf konstruktiv einfache Weise die Möglichkeit geschaffen, das Gut aus der Drehbewegung heraus aus dem Behälter zu entleeren. Die Rinne kann noch mit einem oder mehreren Rüttlern ausgestattet sein, um das Abfließen des Gutes entlang der Rinne zu beschleunigen.

In einer weiteren bevorzugten Ausgestaltung verschließt der Abschlußring das obere Ende der Rinne.

Hierbei ist von Vorteil, daß während des in dem Behälter ablaufenden Behandlungsprozesses gewährleistet wird, daß das Gut nicht unerwünscht aus dem Behälter entweichen kann.

In einer weiteren bevorzugten Ausgestaltung ist der Abschlußring vom Rand der Wand weg nach oben verfahrbar.

Diese Maßnahme hat den Vorteil, daß zum Entleeren des Guts aus dem Behälter der Abschlußring vom Rand der Wand nach oben verfahren werden kann, so daß die zuvor genannten Leitschaufeln das Gut aus der Drehbewegung heraus aus dem Behälter herausbefördern können.

In einer weiteren bevorzugten Ausgestaltung der Vorrichtung ist am Ringraum der Entleerungseinrichtung ein axial betätigbares Abluft-/Zuluft-Ventil angeordnet.

Diese Maßnahme hat den Vorteil, daß mittels des Zuluft-/Abluft-Ventils entweder eine Entlüftung und somit Entstaubung der Entleerungseinrichtung mittels der Prozeßabluft ermöglicht wird, oder daß durch Umschalten des Ventils auf Zuluft das Gut durch Zulufteinführung in seiner Entleerungsbewegung unterstützt wird, indem die luftdurchlässige Rinne fluidisiert wird.

In einer weiteren bevorzugten Ausgestaltung der Vorrichtung ist zwischen der Sprüheinrichtung und der Rückführungsfläche ein Ringkragen angeordnet, der von der Sprüheinrichtung radial geringfügig beabstandet ist.

Diese Maßnahme hat den Vorteil, daß der Ringkragen zusammen mit der Rückführungsfläche eine trichterartige Führung des Guts bewirkt, wodurch gewährleistet wird, daß das Gut in einem solchen Abstand an der Sprühdüse vorbeifließt, in dem das Überzugsmedium bereits vollständig zerstäubt ist und somit optimal auf das Gut aufgebracht werden kann.

Weitere Vorteile ergeben sich aus der nachfolgenden Beschreibung und der beigefügten Zeichnung.

Es versteht sich, daß die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausgewählte Ausführungsbeispiele sind in der Zeichnung dargestellt und werden hiernach mit Bezug auf die Figuren näher beschrieben. Es zeigen:
- Fig. 1: ein erstes Ausführungsbeispiel einer erfindungsgemäßen Vorrichtung in einem Längsschnitt durch eine vertikale Längsmittelebene der Vorrichtung;
- Fig. 2: die Vorrichtung in Fig. 1, wobei Teile der Vorrichtung in Fig. 1 zur Veranschaulichung von Details weggelassen wurden;
- Fig. 3: die Vorrichtung in Fig. 1 unter Weglassung weiterer Teile zur Darstellung einer Entleerungseinrichtung der Vorrichtung;
- Fig. 4: ein zweites Ausführungsbeispiel einer erfindungsgemäßen Vorrichtung in einer Fig. 1 entsprechenden Schnittdarstellung;
- Fig. 5: ein drittes Ausführungsbeispiel einer erfindungsgemäßen Vorrichtung in einer ebenfalls Fig. 1 entsprechenden Schnittdarstellung; und
- Fig. 6: schließlich noch ein viertes Ausführungsbeispiel einer erfindungsgemäßen Vorrichtung in einer Schnittdarstellung, deren Schnittebene gegenüber der Schnittfläche in Fig. 1 um 90° verdreht ist.

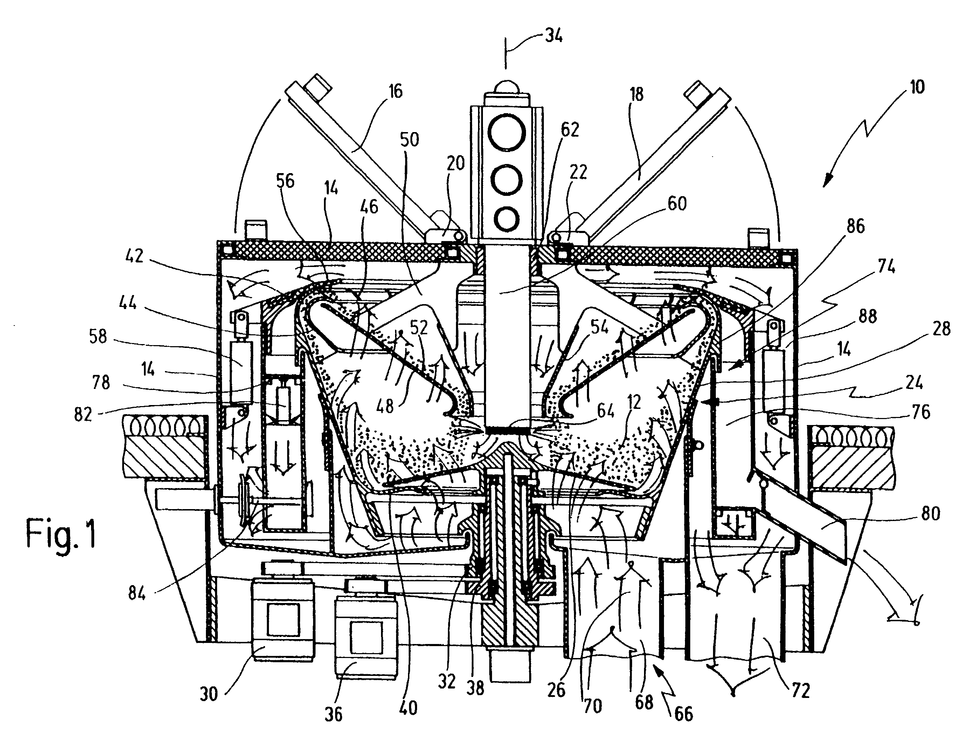

In Fig. 1 bis 3 ist eine mit dem allgemeinen Bezugszeichen 10 versehene Vorrichtung dargestellt, die zur Durchführung eines Verfahrens zum Behandeln eines partikelförmigen Guts 12 mit einem Überzugsmedium geeignet ist, wobei das partikelförmige Gut 12 durch einzelne Punkte in Fig. 1 dargestellt ist.

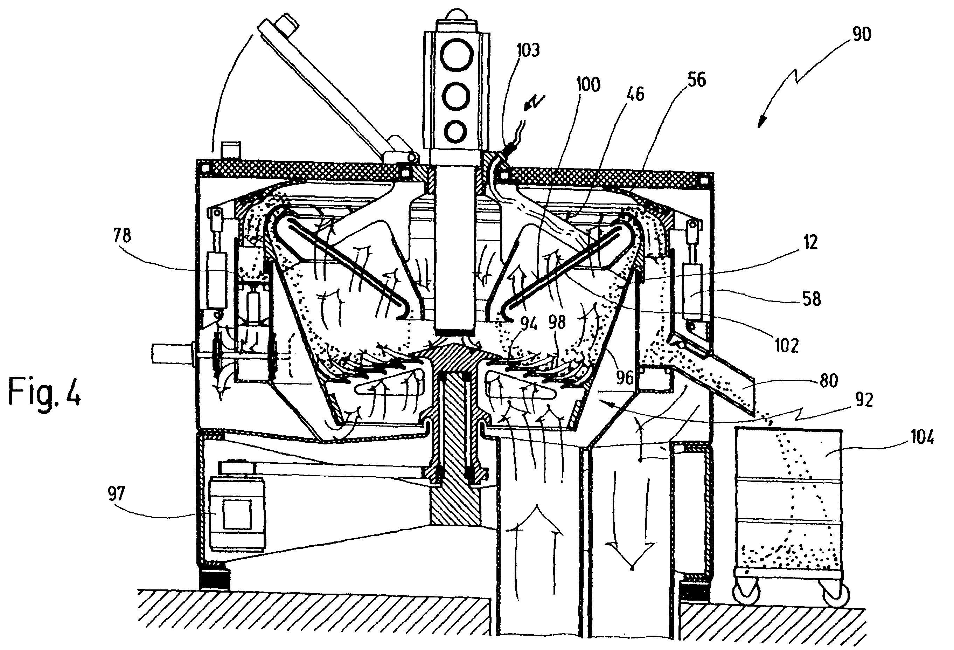

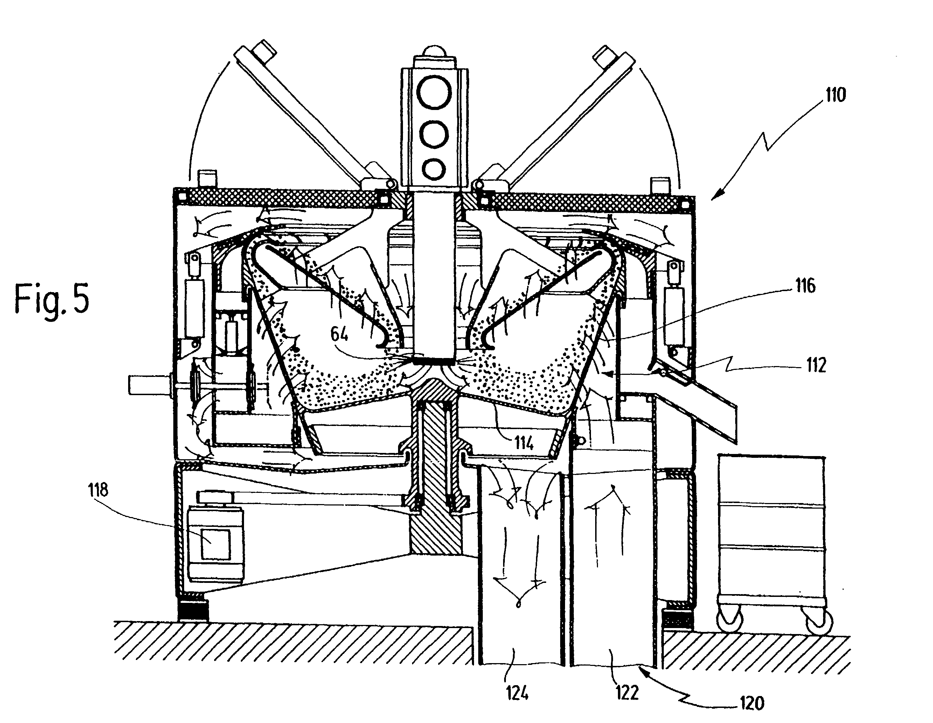

Die Vorrichtung 10 weist ein äußeres im wesentlichen zylindrisches Gehäuse 14 auf, das die Vorrichtung 10 nach außen abschließt und auf einem in Fig. 1 bis 3 nicht dargestellten Sokkel steht. Ein derartiger Sockel ist Fig. 4 und 5 zu entnehmen.

Das Gehäuse 14 ist oben durch zwei in Draufsicht halbkreisförmige Deckel 16 und 18 verschlossen, die aus durchsichtigem Industrieglas gefertigt sind. Die Deckel 16 und 18 dienen als Kontrolltüren für die Sichtbeobachtung des in der Vorrichtung 10 ablaufenden Prozesses.

Die Deckel 16 und 18 sind, wie aus Fig. 1 hervorgeht, verschwenkbar an dem Gehäuse 14 befestigt, und zwar über Scharniere 20 bzw. 22. Während des in der Vorrichtung 10 ablaufenden Prozesses sind die Deckel 16 und 18 selbstverständlich geschlossen, während sie in Fig. 1 zur Veranschaulichung ihrer Verschwenkbarkeit in einer Offenlage dargestellt sind.

In dem Gehäuse 14 ist ein in Rotation versetzbarer Behälter 24 angeordnet, der oben offen ist.

Der Behälter 24, der den eigentlichen Arbeitsbehälter zur Durchführung des Verfahrens bildet, weist einen Boden 26, der im wesentlichen horizontal geringfügig nach außen abfallend verläuft, sowie eine hochstehende Wand 28 auf. Der Boden 26 und die hochstehende Wand 28 sind bei dem Ausführungsbeispiel in Fig. 1 als separate, nicht fest miteinander verbundene Teile ausgebildet. Der Behälter 24 weist insgesamt die Form eines rotationssymmetrischen Körpers auf.

Die hochstehende Wand 28 ist über einen einen Antriebskörper 32 mit einem Antriebsmotor 30 verbunden, wobei die Wand 28 über den Antriebsmotor 30 und den Antriebskörper 32 in Rotation um eine vertikale Drehachse 34 antreibbar ist.

Der Boden 26 ist über einen Antriebskörper 38 mit einem Antriebsmotor 36 verbunden, so daß der Boden 26 ebenfalls um die vertikale Drehachse 34 in Rotation versetzbar ist, und zwar mit einer von der Drehzahl der Wand 28 unabhängig einstellbaren Drehzahl.

Die Antriebsmotoren 30 und 36 sind unabhängig voneinander stufenlos regelbar, wobei der Boden 26 und die hochstehende Wand 28 sogar gegensinnig in Drehung versetzt werden können.

Der Boden 26 ist als voll umfängliche Scheibe in Form eines Bleches ausgebildet, das sich radial nach außen geringfügig nach unten neigt.

Die hochstehende Wand 28 erweitert sich von unten nach oben im wesentlichen konisch. Die Wand 28 ist ebenfalls voll umfänglich ausgebildet. Ein unterer Rand 40 der Wand 28 ist unter den äußeren Umfangsbereich des Bodens 26 radial nach innen eingezogen. Der Boden 26 ist ferner bezüglich des unteren Randes 40 der hochstehenden Wand höhenverstellbar, indem der Antriebskörper 38 als Axialschubelement ausgebildet ist.

Ein oberer Rand 42 der Wand 28 ist ebenfalls radial nach innen gekrümmt eingezogen ausgebildet.

Mit dem oberen Rand 42 der Wand 28 ist ein Führungsringkörper 44 in Form eines als Kragen geformten Bleches fest verbunden, der im oberen Bereich der Wand 28 von dieser radial nach innen beabstandet angeordnet ist. An seinem oberen Ende ist der Führingsringkörper 44 ebenfalls radial nach innen gekrümmt eingezogen, etwa in der Form des oberen Randes 42 der Wand 28. Der Führungsringkörper 44 erstreckt sich mit zunehmendem Abstand von der Wand 28 begrenzt nach unten.

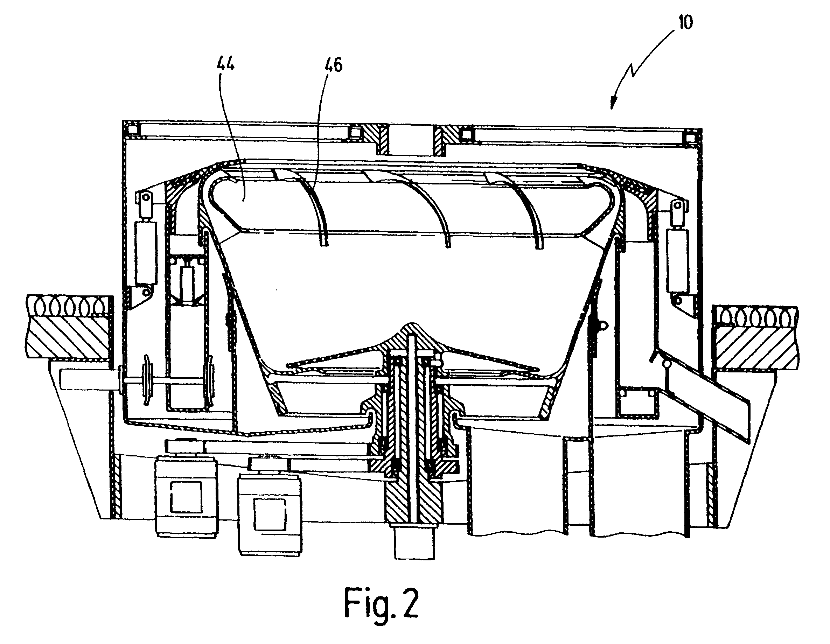

Die feste Verbindung zwischen dem Führungsringkörper 44 und der Wand 28 wird über umfänglich verteilt angeordnete Leitschaufeln 46 hergestellt, die als Knotenbleche ausgebildet und von unten nach oben und in Drehrichtung der Wand 28, die von oben gesehen rechtsdrehend ist, nach rückwärts gekrümmt sind, wie in Fig. 2 dargestellt ist, in der der Führungsringkörper 44 aufgebrochen dargestellt ist.

In dem Behälter 24 ist weiter ein konusförmiger Körper 48 angeordnet, der über vier umfänglich versetzt angeordnete Tragbleche 50 mit dem Oberteil des Gehäuses fest verbunden ist. Der konusförmige Körper 48 ist demnach statisch und dreht nicht mit dem Behälter 24 mit.

Der konusförmige Körper 48 ist oben und unten offen und weist eine Rückführungsfläche 52 für das Gut 12 auf.

Die Tragbleche 50 tragen außerdem einen Ringkragen 54, der innerhalb des lichten Durchgangs des konusförmigen Körpers 48 angeordnet ist und mit diesem an seinem unteren Ende auf etwa gleicher Höhe endet. Der konusförmige Körper 48 und der Ringkragen 54 bilden somit am unteren Ende einen Trichter für den Durchtritt des partikelförmigen Guts 12.

Weiterhin liegt auf dem oberen Rand 42 der Wand 28 ein den Rand 42 radial nach innen überragender Abschlußring 56 auf. Der Abschlußring 56, der den oberen Rand 42 voll umfänglich umgibt, ist über vier umfänglich verteilt angeordnete Pneumatikzylinder 58 höhenverstellbar, d.h. der Abschlußring 56 kann aus der in Fig. 1 ersichtlichen auf dem oberen Rand 42 der Wand 28 aufliegenden Stellung von diesem nach oben weg verfahren werden. Der Abschlußring 56 ist ebenfalls feststehend, wobei der obere Rand 42 beim Rotieren des Behälters 24 unter dem Abschlußring 56, für das partikelförmige Gut 12 undurchlässig, entlanggleitet.

Ferner weist die Vorrichtung 10 eine Sprüheinrichtung 60 auf. Die Sprüheinrichtung 60 ist in einem Support 62 im Oberteil des Gehäuses 14 befestigt. Die Sprüheinrichtung 60 weist eine Sprühdüse 64 auf, die etwa mittig in den Behälter 24 in vertikaler Richtung eintaucht und vom Zentrum des Bodens 26 beabstandet ist.

In die Sprüheinrichtung 60 wird von außerhalb des Gehäuses 14 ein Überzugsmedium, mit dem das Gut behandelt werden soll, zugeführt. Das Überzugsmedium wird von der Sprühdüse 64 radial ringförmig abgesprüht, wie mit Linien 65 angedeutet ist. Die Sprühdüse 64 ist dazu als radial ringförmig abstrahlende Mehrstoffdüse ausgebildet. Die Austrittsöffnung der Sprühdüse 64 befindet sich geringfügig unter dem unteren Rand des konusförmigen Körpers 48 bzw. des Ringkragens 54, wo das Gut 12 von der Rückführungsfläche 52 auf den durchmessergeringeren Bereich des Bodens 26 abfließt.

Die Vorrichtung 10 weist ferner eine Zuführeinrichtung 66 zum Zuführen von Prozeßluft auf. Die Zuführeinrichtung 66 weist einen Zuführkanal 68 auf, der unterhalb des Bodens 26 des Behälters 24 mündet. Die Prozeßluft wird von außen durch das Gehäuse 14 zugeführt, wobei die Strömungsrichtung der Prozeßluft in Fig. 1 durch breite Pfeile 70 veranschaulicht ist.

Der Boden 26 ist auf seinem durchmesserinneren und seinem durchmesseräußeren Bereich prozeßluftdurchlässig ausgebildet, bspw. perforiert. Die Wand 28 des Behälters 24 ist in ihrem unteren Umfangsbereich ebenfalls prozeßluftdurchlässig ausgebildet, bspw. ebenfalls durch entsprechende Perforationen. Ebenso ist der konusförmige Körper 48 prozeßluftdurchlässig. Der konusförmige Körper 48 kann dazu bspw. in beliebiger Weise perforiert sein, oder aus einem mit einem luftdurchlässigen Textil überzogenen Gerüst gefertigt sein.

Ferner weist die Vorrichtung 10 einen Abführkanal 72 zum Abführen der Prozeßluft auf.

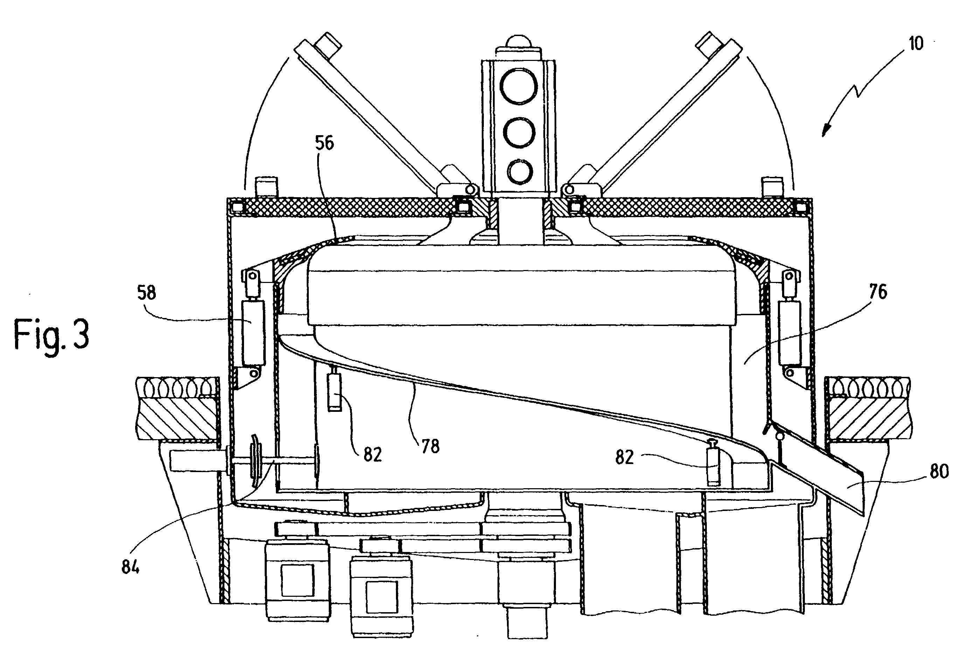

Die Vorrichtung 10 weist ferner eine Entleerungseinrichtung 74 auf. Die Entleerungseinrichtung 74 wird durch einen Ringraum 76 gebildet, der den Behälter 24 umfänglich umgibt. In dem Ringraum 76 ist eine wendelartig ausgebildete Rinne 78 angeordnet, die in Fig. 3 zu sehen ist, in der der Behälter 24 und die Sprüheinrichtung 60 weggelassen sind. Die Rinne 78 erstreckt sich in zwei gegenläufigen Abschnitten von einem oberen Ende des Ringraums 76 in Höhe des oberen Randes 42 der Wand 28 bzw. des Abschlußrings 56 wendelartig über jeweils 180° in beiden Richtungen bis zu einem am unteren Ende des Ringraums 76 angeordneten Entleerungsschuh 80. Die Rinne 78 ist perforiert ausgebildet, wobei unter der Rinne 78 noch Rüttler 82 angeordnet sind, die die Rinne 78 in Vibrationen versetzen, um das Abfließen des Guts 12 beim Entleeren zu unterstützen.

Ferner ist im unteren Bereich des Ringraums 76 ein axiales Zuluft-/Abluft-Ventil 84 angeordnet, das zwischen Zuluft und Abluft umschaltbar ist, um in den Ringraum 76 entweder Luft zuzuführen oder aus diesem Luft abzusaugen. Durch Abführen von Luft aus dem Ringraum 76 kann das Gut 12 beim Entleeren entstaubt werden, durch Zuführen von Luft kann das Abfließen des Guts auf der Rinne 78 beschleunigt werden.

Ferner ist mit der Wand 28 an deren oberen Bereich ein Überlaufring 86 verbunden, der über die innere Wand des Ringraums 76 gestülpt ist und auf dieser beim Rotieren des Behälters 24 gleitet.

Im folgenden wird nun das mit der Vorrichtung 10 durchgeführte Verfahren zum Behandeln des Guts 12 mit dem Überzugsmedium näher beschrieben.

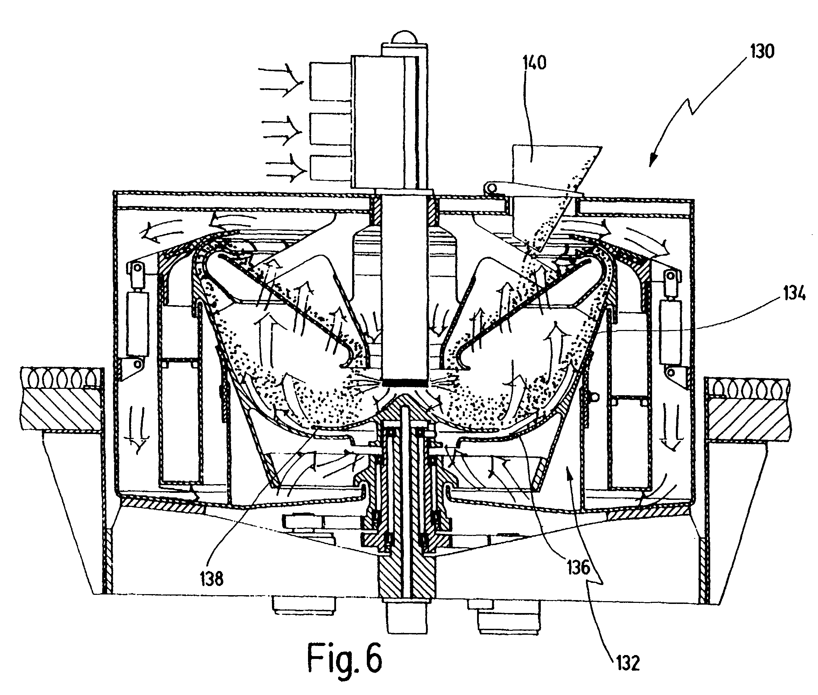

Zu Beginn des Verfahrens wird das zu behandelnde Cut 12 über eine nicht näher dargestellte separat verschließbare Füllöffnung (vgl. Fig. 6 Bezugszeichen 140) in der Oberseite des Gehäuses 14 im Bereich des Supports 62 mittels eines nicht dargestellten Füllschuhs von oben in den Behälter 24 eingefüllt.

Während des Befüllvorganges wird der Behälter 24, d.h. genauer die Wand 28 und der Boden 26, mittels der Antriebsmotoren 30 und 36 um die vertikale Drehachse 34 in Rotation versetzt. Damit keine Partikel des Guts 12 durch den Spalt zwischen dem äußeren Umfang des Bodens 26 und dem unteren Rand 40 des Behälters entweichen können, sitzt der Boden 26 beim Befüllen noch auf dem unteren Rand 40 der Wand 28 auf. Der Boden 26 und die Wand 28 werden beim Befüllen daher mit gleicher Drehgeschwindigkeit angetrieben, um eine Reibung zwischen beiden zu vermeiden.

Während des Befüllvorganges wird außerdem die Prozeßluft durch den Zuführkanal 68 in die Vorrichtung 10 auf sogenannter Füllstufe zugeführt. Während der Füllstufe findet der erste Entstaubungsvorgang des partikelförmigen Guts 12 statt. Die Partikel werden dabei langsam und sehr schonend bewegt, da sie noch keine stabilisierte Oberfläche haben. Sämtliche Grate und Oberflächenstäube, die bspw. von der Tablettierung von Arzneimittelformlingen herrühren, können über den Abführkanal 72 abgesaugt werden.

Das partikelförmige Gut wird anschließend mittels der trockenwarmen Prozeßluft auf die gewünschte Prozeßtemperatur erwärmt. Nach dem Entstauben des Guts 12 wird das Besprühen des Guts 12 mittels der Sprüheinrichtung 60 in Gang gesetzt. Schon vor dem Start des Prozesses wird die Sprühdüse 64 mit Zerstäuberluft und Stützluft beflutet, um sicherzustellen, daß das Überzugsmedium beim Austritt aus der Sprühdüse 64 sofort zerstäubt und somit optimal auf die Oberfläche des Guts 12 aufgebracht werden kann.

Das partikelförmige Gut 12 wird während der Behandlung in dem Behälter 24 in einer fortlaufenden Umwälzbewegung entlang des Bodens 26 von dessen durchmesserinnerem Bereich in seinen durchmesseräußeren Bereich, von dort entlang der hochstehenden Wand 28 von deren unteren Bereich in deren oberen Bereich und vom oberen Bereich der Wand 28 über die Rückführungsfläche 52 zum durchmesserinneren Bereich des Bodens 26 zurückbewegt. Die Bewegung des partikelförmigen Guts 12 ist dabei entlang des Bodens 26 und der hochstehenden Wand 28 aufgrund deren rotierender Bewegung zentrifugal tangential schlingend drehend, so daß eine gute Durchmischung des Guts 12 erzielt wird. Während dieser fortlaufenden Umwälzbewegung wird das Gut 12 mit dem Überzugsmedium durch die Sprühdüse 64 am unteren Ende der Rückführungsfläche 52 bzw. geringfügig darunter beim Abfließen auf den Boden 26 besprüht, und zwar erfolgt das Besprühen radial über den gesamten vollen Umfang der Sprühdüse 64 auf das ringkragenartig vorbeifließende Gut 12. Der Ringkragen 54 sorgt dafür, daß das Gut 12 in einem geringen Mindestabstand von der Sprühdüse 64 entfernt an dieser vorbeifließt, wodurch gewährleistet ist, daß sich der Sprühnebel bereits vollständig ausgebildet hat. Sobald das Gut 12 nach dem Besprühen mit dem Überzugsmedium auf den Boden 26 abgeflossen ist, wird das Gut 12 aufgrund der durch den rotierenden Boden 26 hervorgerufenen Zentrifugalkräfte wieder radial nach außen bewegt.

Beim wirbelartig drehenden Aufsteigen des Guts 12 an der hochstehenden Wand 28 des Behälters 24 wird das Gut 12 durch die Formgebung des oberen Randes 42 der Wand 28 und des Führungsringkörpers 44 im oberen Bereich des Behälters 24 radial nach innen in seiner Bewegung umgelenkt. Die Leitschaufeln 46 zwischen dem oberen Rand 42 der Wand 28 und dem Führungsringkörper 44, die demnach mit der Wand 28 umlaufen, lenken das Gut 12 gegen die Unterseite des Abschlußrings 56, wodurch das Gut 12 an dem Abschlußring 56 abgebremst wird und danach auf die Rückführungsfläche 52 des konusförmigen Körpers 48 abfällt. Auf der Rückführungsfläche 52 fließt das Gut 12 unter der Wirkung der Schwerkraft ab. Das jeweils an der Wand 28 aufsteigende nachfließende Gut 12 bewirkt eine Massenschubkraft, die das vorfließende Gut 12 durch den Ringspalt zwischen dem oberen Rand 42 der Wand 28 und dem Führungsringkörper 44 hindurchschiebt.

Während des kontinuierlich stattfindenden Sprühvorgangs wird das in Umwälzung befindliche Gut 12 ebenfalls kontinuierlich getrocknet. Dazu wird die Prozeßluft, die durch den Zuführkanal 68 zugeführt wird, durch den Boden 26 durch das darüber befindliche Gut 12 geleitet, wie anhand der Pfeile 70 in Fig. 1 dargestellt ist. Die Prozeßluft durchflutet dabei auch bereits das gerade zuvor besprühte, auf den durchmesserinneren Bereich des Bodens 26 herabfallende Gut. Diese Ausgestaltung der Vorrichtung 10 und des Verfahrens eignet sich daher insbesondere zum Filmbeschichten, bei dem der Trocknungsvorgang sich unmittelbar an das Besprühen des Guts 12 anschließt.

Ein Teil der Prozeßluft wird außerdem durch den unteren Bereich der Wand 28 hindurch durch das an der Wand 28 aufsteigende Gut 12 geleitet. Somit wird auch in diesem Bereich der Umwälzbewegung das Gut 12 effektiv getrocknet. Außerdem unterstützt die durch die Wand 28 zugeführte Prozeßluft das Aufsteigen des Guts 12 an der Wand 28.

Dieselbe Prozeßluft, die das Gut 12 am Boden 26 bzw. an der Wand 28 durchflutet hat, strömt weiterhin durch das auf der Rückführungsfläche 52 abfließende Gut 12 hindurch. Auf diese Weise wird eine Zweiphasentrocknung des Guts 12 während seiner Umwälzbewegung erreicht.

Die Prozeßluft, die die Feuchtigkeit des Überzugsmediums aufgenommen hat, wird schließlich über den oberen Bereich der Vorrichtung 10 über einen noch außerhalb des Ringraums 76 der Entleerungseinrichtung 74 befindlichen Ringraum 88 durch den Abführkanal 72 abgesaugt.

Wie aus Fig. 1 hervorgeht, kommt das auf der Rückführungsfläche 52 abfließende Gut 12 mit dem sich entlang des Bodens 26 und entlang der Wand 28 bewegende Gut nicht in Berührung. In dem gutfreien Raum unterhalb des konusförmigen Körpers 48 findet eine turbulente Durchmischung der Prozeßluft statt, d.h. Prozeßluft, die das Gut 12 im durchmesserinneren Bereich kurz nach dem Besprühen mit dem Überzugsmedium durchflutet hat, durchmischt sich mit der Prozeßluft, die das Gut 12 im durchmesseräußeren Bereich durchflutet hat und demnach weniger Feuchtigkeit aufgenommen hat, weil das Gut in diesem Bereich bereits vorgetrocknet ist. Die das auf der Rückführungsfläche 52 abfließende Gut 12 durchströmende Prozeßluft hat somit einen mittleren Feuchtigkeitsgehalt, der geringer ist als der Feuchtigkeitsgehalt der das Gut 12 im durchmesserinneren Bereich durchflutenden Prozeßluft.

Sobald das Beschichten des Guts 12 vollendet und der erforderliche Trocknungsgrad erreicht ist, wird das Gut 12 aus seiner Drehbewegung heraus durch die Entleerungseinrichtung 74 über die Rinne 78 durch den Entleerungsschuh 80 entleert. Zum Entleeren wird der Abschlußring 56 über die Pneumatikzylinder 58 vertikal nach oben verfahren. Die in Drehrichtung nach rückwärts gekrümmten Leitschaufeln 46 tragen dann das partikelförmige Gut 12 auf die Rinne 78 aus. Die Rinne 78 kann mittels der Rüttler 82 noch in Vibration versetzt werden. Weiterhin kann der Ringraum 76 der Entleerungseinrichtung 76 durch Betätigen des Zuluft-/Abluft-Ventils 84 zur Unterstützung der Entleerungsbewegung besaugt werden.

Es ist noch zu erwähnen, daß während des Prozesses, sobald genügend Prozeßluft ansteht, der Boden 26 über den als Axialschubelement ausgebildeten Antriebskörper 38 vom unteren Rand 40 der Wand 28 abgehoben werden kann, so daß die Prozeßluft auch durch den Spalt am äußeren Umfang des Bodens 26 nach oben entlang der Wand 28 strömen und die Bewegung des Guts 12 entlang der Wand 28 unterstützen kann. Außerdem kann der Boden 26 mit einer unterschiedlichen Geschwindigkeit zur Wand 28 angetrieben werden, wodurch sich in dem Gut 12 im Übergangsbereich zwischen dem Boden 26 und der Wand 28 eine die Durchmischung fördernde Schlingbewegung einstellt.

In Fig. 4 ist ein weiteres Ausführungsbeispiel einer Vorrichtung 90 dargestellt. Im folgenden werden nur die Unterschiede zu dem vorherigen Ausführungsbeispiel erläutert. Sich von dem Ausführungsbeispiel in Fig. 1 bis 3 nicht unterscheidende Merkmale werden mit den gleichen Bezugszeichen wie in Fig. 1 bis 3 bezeichnet, soweit sie zur Erläuterung herangezogen werden müssen.

Die Vorrichtung 90 weist einen Behälter 92 auf, dessen Boden 94 fest mit einer hochstehenden Wand 96 des Behälters 92 verbunden ist. Demnach sind der Boden 94 und die Wand 96 über einen einzigen Antriebsmotor 97 gemeinsam mit gleicher Geschwindigkeit in Rotation antreibbar.

Der Boden 94 ist aus einer Anordnung von konzentrischen horizontal liegenden Ringen 98 gebildet, die übereinanderliegend angeordnet sind, und deren Durchmesser vom innersten obersten Ring zum äußersten untersten Ring zunimmt. Jeweils benachbarte Ringe 98 überlappen sich in radialer Richtung teilweise, und bilden im sich überlappenden Bereich jeweils einen Ringspalt, durch den die Prozeßluft mit radialer Komponente in den Behälter 92 eingeleitet wird. Die radial das Gut 12 durchflutende Prozeßluft unterstützt die radial nach außen gerichtete Bewegung des Guts 12 entlang des Bodens 94. Die Prozeßluft bildet somit nicht nur ein Luftkissen wie bei dem Ausführungsbeispiel in Fig. 1, sondern unterstützt zusätzlich die Bewegung des Guts 12 entlang des Bodens 94.

Ferner ist unter einer Rückführungsfläche 100, die wiederum konisch ist, eine Heizung 102 in Form eines elektrischen Heizgewebes angeordnet, die über einen elektrischen Anschluß mit Spannung versorgt wird. Die Prozeßluft erwärmt sich beim Durchströmen der Heizung 102. Durch die Erwärmung sinkt die relative Feuchtigkeit der Prozeßluft, die zuvor von dem Gut 12 am Boden 94 Feuchtigkeit aufgenommen hat, wodurch die Feuchtigkeitsaufnahmekapazität der Prozeßluft beim Durchfluten des sich auf der Rückführungsfläche 100 zum Boden 94 zurückbewegenden Guts 12 erhöht wird. Dadurch wird eine Rückbefeuchtung des auf der Rückführungsfläche 100 abfließenden Guts 12 durch die feuchte Prozeßluft vermieden, und statt dessen das Gut 12 auch beim Abfließen effektiv getrocknet.

Ferner kann vorgesehen sein, die konische Rückführungsfläche 100 in einer ähnlichen Ausgestaltung wie der Boden 94 aus einer übereinanderliegenden Anordnung von Ringen, jedoch mit von unten nach oben zunehmendem Durchmesser auszugestalten, so daß Ringspalte entstehen, durch die die aufsteigende Prozeßluft radial nach innen gerichtet durch die Rückführungsfläche 100 durchtritt, wodurch das Abfließen des Guts 12 auf dieser beschleunigt wird.

Die Vorrichtung 90 ist im Unterschied zu der Vorrichtung 10 in Fig. 1 bis 3 in ihrem Entleerungsbetriebszustand dargestellt. Dazu ist, wie bereits zuvor erläutert wurde, der Abschlußring 56 mittels der Pneumatikzylinder 58 von der Wand 96 des Behälters 92 abgehoben worden. Das Gut 12 wird aus seiner Drehbewegung heraus, vermittelt durch die Leitschaufeln 46, auf die Rinne 78 ausgetragen, auf der es wendelartig abfließt und durch den Entleerungsschuh 80 in einen Transportbehälter 104 entleert wird.

Die Vorrichtung 90 gemäß Fig. 4 eignet sich wie die Vorrichtung 10 insbesondere zum Filmbeschichten von Arznei- oder Lebensmittelformlingen.

In Fig. 5 ist ein weiteres Ausführungsbeispiel einer Vorrichtung 110 dargestellt. Die Vorrichtung 110 weist wie bei dem vorherigen Ausführungsbeispiel einen Behälter 112 auf, dessen Boden 114 mit einer hochstehenden Wand 116 fest verbunden ist. Demnach ist wie bei dem vorherigen Ausführungsbeispiel als Drehantrieb für den Behälter 112 lediglich ein Antriebsmotor 118 vorgesehen.

Im Unterschied zu den beiden vorherigen Ausführungsbeispielen weist die Vorrichtung 110 eine Zuführeinrichtung 120 zum Zuführen von Prozeßluft auf, die einen Zuführkanal 122 aufweist, der außerhalb des äußeren Umfangs des Bodens 114 am Außenumfang der Wand 116 mündet.

Während der Boden 114 prozeßluftundurchlässig ist, wird die Prozeßluft durch die Wand 116, die entsprechend prozeßluftdurchlässig ausgebildet ist, in dem Behälter 112 eingeleitet, und durchflutet das Gut 12 erst, wenn dieses sich entlang der Wand 116 nach oben bewegt.

Der sich entlang des Bodens 114 bewegende Teil des Guts 12, der zuvor mittels der Sprühdüse 64 besprüht wurde, wird von der Prozeßluft dagegen nicht durchflutet, so daß sich das zuvor aufgesprühte Überzugsmedium auf dem Gut 12 ohne Trocknung zunächst ausreichend gleichmäßig verteilen kann. Der Boden 114, dessen Oberseite glatt ausgebildet ist, verteilt das zuvor aufgesprühte Überzugsmedium durch mechanische Wälzeinwirkung auf die Partikeloberfläche des sich entlang des Bodens 114 bewegenden Guts. Die Trocknung des Überzugsmediums erfolgt erst bei der Bewegung des Guts entlang der Wand 116. Durch diese Ausgestaltung eignet sich die Vorrichtung 110 insbesondere zum Dragieren von Partikeln, da es beim Dragieren wesentlich darauf ankommt, einen Überzug gleichmäßiger Dicke zu erzeugen.

Die Abführung der feuchten Prozeßluft erfolgt durch einen Abführkanal 124.

Schließlich ist in Fig. 6 ein weiteres Ausführungsbeispiel einer Vorrichtung 130 dargestellt, die ebenfalls wie die Vorrichtung 110 in Fig. 5 insbesondere zum Dragieren eines partikelförmigen Guts geeignet ist.

Gegenüber den vorherigen Darstellungen gemäß Fig. 1 bis 5 ist die Vorrichtung 130 in einem dazu um 90° versetzten Schnitt dargestellt.

Die Vorrichtung 130 weist einen Behälter 132 auf, dessen hochstehende Wand 134 einen unteren Rand 136 aufweist, der im Vergleich zu dem Ausführungsbeispiel in Fig. 1 noch weiter radial nach innen gekrümmt eingezogen ist. Ein Boden 138 des Behälters 132 weist dagegen einen kleineren Durchmesser auf als bspw. der Boden 26 in Fig. 1, dessen äußerer Umfang den unteren Rand 136 der Wand 134 jedoch wiederum teilweise überlappt. Der Boden 138 ist wie bei dem Ausführungsbeispiel in Fig. 1 nicht fest mit der Wand 134 verbunden, sondern kann unabhängig von der Wand 134 in Rotation versetzt werden.

Charakteristisch an der Ausgestaltung des Bodens 138 und des unteren Rands 136 der Wand 134 ist, daß die gekrümmte Form des Bodens 138 fließend in die gekrümmte Form des unteren Rands 136 der Wand 134 übergeht, so daß die Bewegung des produktförmigen Guts 12 im Übergangsbereich zwischen dem Boden 138 und der Wand 134 sehr stetig und harmonisch verläuft. Die Prozeßluft wird hier durch den Spalt zwischen dem äußeren Umfang des Bodens 138 und dem unteren Rand 136 der Wand 134 in das sich in Bewegung befindliche Gut 12 eingeleitet. Die Prozeßluft unterstützt dabei die harmonische Bewegung des Guts 12 beim Übergang vom Boden 138 auf die Wand 134. Die Prozeßluftzuführung in das bewegte Gut 12 ist von der Sprühdüse 64 wiederum wie bei dem vorherigen Ausführungsbeispiel soweit beabstandet, daß das Gut 12 nach dem Besprühen zunächst auf dem rotierenden Boden 138 gewalkt wird, so daß sich das Überzugsmedium gleichmäßig auf den Partikeln des Guts 12 verteilen kann.

Um eine stärkere Durchmischung des Guts 12 im Bereich des Übergangs vom Boden 138 auf die Wand 134 zu erreichen, wird der Boden 138 mit einer anderen Drehzahl angetrieben als die Wand 134, so daß durch die Relativgeschwindigkeit zwischen dem Boden 138 und der Wand 134 eine schlingernde Bewegung des partikelförmigen Guts 12 erreicht wird. Der Boden 138 kann zur Verstärkung des Schlingereffekts auch bezüglich der Wand 134 in Gegenrichtung angetrieben werden.

Ferner ist in Fig. 6 ein Befüllschuh 140 dargestellt, über den die Vorrichtung 130 mit dem partikelförmigen Gut 12 befüllt werden kann, wie bereits im Zusammenhang mit Fig. 1 beschrieben wurde.

Es ist noch anzumerken, daß die zuvor beschriebenen Ausführungsbeispiele miteinander kombinierbar sind, insbesondere, daß die zuvor beschriebenen Behälter gegeneinander austauschbar sind, um eine einzige Vorrichtung bereitzustellen, die an den speziellen Einsatzzweck, bspw. Dragieren oder Filmbeschichten, durch Austauschen der Behälter schnell und einfach angepaßt werden kann.

## Patentansprüche

1. Verfahren zum Behandeln eines partikelförmigen Guts (12) mit einem Überzugsmedium, insbesondere zum Dragieren oder Filmbeschichten von Arznei- oder Lebensmittelformlingen, wobei das Gut (12) in einen Behälter (24; 92; 112; 132) eingefüllt, in dem Behälter (24; 92; 112; 132) durch Rotieren des Behälters (24; 92; 112; 132) bewegt und mit dem Überzugsmedium besprüht und das aufgesprühte Überzugsmedium mittels Prozeßluft getrocknet wird, **dadurch gekennzeichnet, daß** das Gut (12) in dem Behälter (24; 92; 112; 132) in einer fortlaufenden Umwälzbewegung entlang eines Bodens (26; 94; 114; 138) von einem durchmesserinneren in einen durchmesseräußeren Bereich des Behälters (24; 92; 112; 132), von dort entlang einer hochstehenden Wand (28; 96; 116; 134) des Behälters (24; 92; 112; 132) von einem unteren in einen oberen Bereich des Behälters (24; 92; 112; 132) und von dort entlang einer schrägen Rückführungsfläche (52; 100) wieder zu dem durchmesserinneren Bereich des Bodens (26; 94; 114; 138) bewegt wird.

2. Verfahren nach Anspruch 1, **dadurch gekennzeichnet, daß** das in Bewegung befindliche Gut (12) beim Abfließen des Guts (12) von der Rückführungsfläche (52; 100) auf den Boden (26; 94; 114; 138) mit dem Überzugsmedium besprüht wird.

3. Verfahren nach Anspruch 1 oder 2, **dadurch gekennzeichnet, daß** das Überzugsmedium ringförmig radial nach außen gerichtet auf das Gut (12) gesprüht wird.

4. Verfahren nach einem der Ansprüche 1 bis 3, **dadurch gekennzeichnet, daß** das Gut (12) entlang des Bodens (26; 94; 114; 138) mit einer im Vergleich zur Bewegung entlang der Wand (28; 96; 116; 134) unterschiedlichen Geschwindigkeit bewegt wird.

5. Verfahren nach einem der Ansprüche 1 bis 4, **dadurch gekennzeichnet, daß** die Prozeßluft durch das Gut (12) geleitet wird, während dieses entlang des Bodens (26; 94) bewegt wird.

6. Verfahren nach Anspruch 5, **dadurch gekennzeichnet, daß** die Prozeßluft mit radial nach außen gerichteter Komponente durch das Gut (12) geleitet wird.

7. Verfahren nach einem der Ansprüche 1 bis 6, **dadurch gekennzeichnet, daß** die Prozeßluft durch das Gut (12) geleitet wird, während dieses entlang der Wand (28; 96; 116; 134) bewegt wird.

8. Verfahren nach einem der Ansprüche 1 bis 4, **dadurch gekennzeichnet, daß** die Prozeßluft ausschließlich durch das entlang der Wand (116; 134) bewegte Gut (12) geleitet wird, ohne daß das entlang des Bodens (114; 138) bewegte Gut (12) von der Prozeßluft durchströmt wird.

9. Verfahren nach einem der Ansprüche 5 bis 8, **dadurch gekennzeichnet, daß** die Prozeßluft auch durch das entlang der Rückführungsfläche (52; 100) zurückbewegte Gut (12) geleitet wird.

10. Verfahren nach Anspruch 9, **dadurch gekennzeichnet, daß** die Prozeßluft vor dem Durchströmen des sich zum Boden (94) zurückbewegenden Guts (12) erwärmt wird.

11. Verfahren nach einem der Ansprüche 1 bis 10, **dadurch gekennzeichnet, daß** das Gut (12) aus der Drehbewegung heraus entleert wird.

12. Vorrichtung zum Behandeln eines partikelförmigen Guts (12) mit einem Überzugsmedium, insbesondere zum Dragieren oder Filmbeschichten von Arznei- oder Lebensmittelformlingen, insbesondere zur Durchführung des Verfahrens nach einem der Ansprüche 1 bis 11, mit einem um eine Drehachse (34) in Rotation antreibbaren Behälter (24; 92; 112; 132), einer Sprüheinrichtung (60) zum Besprühen des Guts (12) mit dem Überzugsmedium, und mit einer Zuführeinrichtung (66; 120) zum Zuführen von Prozeßluft, **dadurch gekennzeichnet, daß** der Behälter (24; 92; 112; 132) einen Boden (26; 94; 114; 138) und eine hochstehende Wand (28; 96; 116; 134) aufweist, daß die Drehachse (34) des Behälters (24; 92; 112; 132) im wesentlichen vertikal steht, und daß in dem Behälter (24; 92; 112; 132) eine schräge Rückführungsfläche (52; 100) angeordnet ist, die sich von einem oberen Bereich des Behälters (24; 92; 112; 132) in Richtung eines durchmesserinneren Bereichs des Bodens (26; 94; 114; 138) erstreckt.

13. Vorrichtung nach Anspruch 12, **dadurch gekennzeichnet, daß** die Sprüheinrichtung (60) zumindest eine Sprühdüse (64) aufweist, die in einem Bereich zwischen einem unteren Ende der Rückführungsfläche (52; 100) und dem Boden (26; 94; 114; 138) angeordnet ist.

14. Vorrichtung nach Anspruch 13, **dadurch gekennzeichnet, daß** die Sprühdüse (64) eine radial ringförmig abstrahlende Sprühdüse (64), insbesondere eine Mehrstoffdüse ist.

15. Vorrichtung nach einem der Ansprüche 12 bis 14, **dadurch gekennzeichnet, daß** der Boden (26; 138) des Behälters (24; 132) mit der Wand (28; 134) außer Kontakt bringbar und mit von der Drehzahl der Wand (28; 134) unabhängiger Drehzahl in Rotation antreibbar ist.

16. Vorrichtung nach einem der Ansprüche 12 bis 15, **dadurch gekennzeichnet, daß** die Zuführeinrichtung (66) für die Prozeßluft einen Zuführkanal (68) aufweist, der unter dem Boden (26; 94) mündet, und daß der Boden (26; 94) in seinem durchmesserinneren und/oder durchmesseräußeren Bereich prozeßluftdurchlässig ist.

17. Vorrichtung nach Anspruch 16, **dadurch gekennzeichnet, daß** der Boden (94) aus einer im wesentlichen konzentrischen Anordnung mehrerer übereinanderliegender Ringe (98) unterschiedlicher Durchmesser gebildet ist, wobei sich jeweils benachbarte Ringe (98) teilweise vertikal beabstandet überlappen, und wobei der Durchmesser der Ringe (98) von unten nach oben abnimmt.

18. Vorrichtung nach Anspruch 16 oder 17, **dadurch gekennzeichnet, daß** die Wand (28; 116) zumindest in ihrem unteren Bereich prozeßluftdurchlässig ist.

19. Vorrichtung nach einem der Ansprüche 12 bis 15, **dadurch gekennzeichnet, daß** die Zuführeinrichtung (120) einen Zuführkanal (112) aufweist, der seitlich des Bodens (114) im Bereich der Wand (116) mündet, wobei die Wand (116) in diesem Bereich prozeßluftdurchlässig ist.

20. Vorrichtung nach einem der Ansprüche 12 bis 19, **dadurch gekennzeichnet, daß** die Rückführungsfläche (52; 100) prozeßluftdurchlässig ist.

21. Vorrichtung nach Anspruch 20, **dadurch gekennzeichnet, daß** unter der Rückführungsfläche (100) eine Heizung (102) zum Erwärmen der Prozeßluft angeordnet ist.

22. Vorrichtung nach einem der Ansprüche 12 bis 21, **dadurch gekennzeichnet, daß** ein oberer Rand (42) des Behälters (24; 92; 112; 132) radial nach innen gekrümmt ist.

23. Vorrichtung nach einem der Ansprüche 12 bis 22, **dadurch gekennzeichnet, daß** innerhalb des Behälters (24; 92; 112; 132) in dessen oberem Umfangsbereich ein Führungsringkörper (44) angeordnet ist, der mit der Wand (28; 96; 116; 134) des Behälters (24; 92; 112; 132) von dieser radial beabstandet verbunden ist, so daß zwischen dem Führungsringkörper (44) und dem oberen Umfangsbereich der Wand (28; 96; 116; 134) ein radial nach innen abgekrümmter Durchtrittsspalt für das sich bewegende Gut (12) gebildet wird.

24. Vorrichtung nach Anspruch 23, **dadurch gekennzeichnet, daß** der Führungsringkörper (44) mit der Wand (28; 96; 116; 134) des Behälters (24; 92; 112; 132) mittels mehrerer Leitschaufeln (46) verbunden ist, wobei die Leitschaufeln (46) in Drehrichtung gesehen und von unten nach oben rückwärts gekrümmt sind.

25. Vorrichtung nach Anspruch 24, **dadurch gekennzeichnet, daß** über dem Behälter (24; 92; 112; 132) ein den oberen Rand (42) des Behälters radial nach innen überragender, feststehender, auf dem Rand (42) der Wand (28; 96; 116; 134) gleitender Abschlußring (56) angeordnet ist.

26. Vorrichtung nach einem der Ansprüche 12 bis 25, **dadurch gekennzeichnet, daß** eine Entleerungseinrichtung (74) zum Entleeren des Behälters (24; 92; 112; 132) vorgesehen ist, die einen den Behälter (24; 92; 112; 132) umgebenden Ringraum (76) aufweist, in dem eine den Behälter (24; 92; 112; 132) wendelartig umgebende Rinne (78) angeordnet ist, deren oberes Ende im Bereich des oberen Randes (42) der Wand (28; 96; 116; 134) des Behälters (24; 92; 112; 132) angeordnet ist.

27. Vorrichtung nach Anspruch 25 und 26, **dadurch gekennzeichnet, daß** der Abschlußring (56) das obere Ende der Rinne (78) verschließt.

28. Vorrichtung nach Anspruch 27, **dadurch gekennzeichnet, daß** der Abschlußring (56) von dem Rand (42) der Wand (28; 96; 116; 134) des Behälters (24; 92; 112; 132) weg nach oben verfahrbar ist.

29. Vorrichtung nach Anspruch 28, **dadurch gekennzeichnet, daß** am Ringraum (76) ein axial betätigbares Abluft-/Zuluft-Ventil (84) angeordnet ist.

30. Vorrichtung nach einem der Ansprüche 13 bis 29, **dadurch gekennzeichnet, daß** zwischen der Sprüheinrichtung (60) und der Rückführungsfläche (52; 100) ein Ringkragen (54) angeordnet ist, der von der Sprüheinrichtung (60) radial beabstandet ist.

## Claims

1. A method for treating particulate material (12) with a coating medium, in particular for sugarcoating or film-coating pharmaceutical or food preformed pieces, wherein the material (12) is filled into a container (24; 92; 112; 132), moved in the container (24; 92; 112; 132) by rotating the container (24; 92; 112; 132) and sprayed with the coating medium and the sprayed coating medium is dried with process air, **characterized in that** the material (12) is moved in the container (24; 92; 112; 132) in continuous circulating motion along a bottom (26; 94; 114; 138) from an inner diameter to an outer diameter region of the container (24; 92; 112; 132), from there along an upstanding wall (28; 96; 116; 134) of the container (24; 92; 112; 132) from a lower region to an upper region of the container (24; 92; 112; 132) and from there along an inclined return surface (52; 100) back to the inner diameter region of the bottom (26; 94; 114; 138).

2. The method of claim 1, **characterized in that** the moving material (12) is sprayed with the coating medium when flowing down off of the return surface (52; 100) onto the bottom (26; 94; 114; 138).

3. The method of claim 1 or 2, **characterized in that** the coating medium is sprayed annularly and radially outwardly directed onto the material (12).

4. The method of anyone of claims 1 through 3, **characterized in that** the material (12) is moved along the bottom (26; 94; 114; 138) at a different speed compared to the movement along the wall (28; 96; 116; 134).

5. The method of anyone of claims 1 through 4, **characterized in that** the process air is passed through the material (12) during its movement along the bottom (26; 94).

6. The method of claim 5, **characterized in that** the process air is passed through the material (12) with a radially outwardly directed component.

7. The method of anyone of claims 1 through 6, **characterized in that** the process air is passed through the material (12) as it is moved along the wall (28; 96; 116; 134).

8. The method of anyone of the claims 1 through 4, **characterized in that** the process air is exclusively passed through the material (12) as it is moved along the wall (116; 134), without the material (12) moved along the bottom (114; 138) being passed by the process air.

9. The method of anyone of claims 5 through 8, **characterized in that** the process air is also passed through the material (12) when moved back along the return surface (52; 100).

10. The method of claim 9, **characterized in that** the process air is heated before passing through the material (12) moving back to the bottom (94).

11. The method of anyone of claims 1 through 10, **characterized in that** the material (12) is discharged through its centrifugal motion.

12. An apparatus for treating particulate material (12) with a coating medium, in particular for sugarcoating or film-coating pharmaceutical or food preformed pieces, in particular for carrying out the method of any one of claims 1 through 11, comprising a container (24; 92; 112; 132) drivable to rotate about a rotation axis (34), a spraying device (60) for spraying the coating medium onto the material (12) and supplying means (66; 120) for supplying process air, **characterized in that** the container (24; 92; 112; 132) comprises a bottom (26; 94; 114; 138) and an upstanding wall (28; 96; 116; 134), the rotation axis (34) of the container (24; 92; 112; 132) is substantially vertical, and an inclined return surface (52; 100) is arranged in the container (24; 92; 112; 132) which extends from an upper region of the container (24; 92; 112; 132) in the direction of an inner diameter region of the bottom (26; 94; 114; 138).

13. The apparatus of claim 12, **characterized in that** the spraying device comprises at least one spray nozzle (64) arranged in a region between a lower end of the return surface (52; 100) and the bottom (26; 94; 114; 138).

14. The apparatus of claim 13, **characterized in that** the spray nozzle (64) is a radially, annularly spraying spray nozzle (64), in particular a multi-substance nozzle.

15. The apparatus of anyone of claims 12 through 14, **characterized in that** the bottom (26; 138) of the container (24; 132) can be placed out of contact with the wall (28; 134) and can be driven at a rotary speed independent of the rotary speed of the wall (28; 134).

16. The apparatus of anyone of claims 12 through 15, **characterized in that** the supplying means (66) for the process air comprise a supplying channel (68) opening below the bottom (26; 94) and wherein the bottom (26; 94) is process air permeable in its inner diameter and/or outer diameter region.

17. The apparatus of claim 16, **characterized in that** the bottom (94) is formed of a substantially concentric arrangement of several overlying rings (98) of differing diameter, wherein adjacent rings (98) partially overlap with a vertical spacing and wherein the diameter of the rings (98) decreases from bottom to top.

18. The apparatus of claim 16 or 17, **characterized in that** the wall (28; 116) is process air permeable at least in its lower region.

19. The apparatus of anyone of claims 12 through 15, **characterized in that** the supplying means (120) comprise a supplying channel (112) opening in the region of the wall (116) at the side of the bottom (114), and wherein the wall (116) is process air permeable in this region.

20. The apparatus of anyone of claims 12 through 19, **characterized in that** the return surface (52; 100) is process air permeable.

21. The apparatus of claim 20, **characterized in that** a heater (102) for heating the process air is arranged below the return surface (100).

22. The apparatus of anyone of claims 12 through 21, **characterized in that** an upper edge (42) of the container (24; 92; 112; 132) is curved radially inwardly.

23. The apparatus of anyone of claims 12 through 22, **characterized in that** an annular guide element (44) is arranged within the container (24; 92; 112; 132) in its upper peripheral region, which is radially spaced from the wall (28; 96; 116; 134) of the container (24; 92; 112; 132) and connected thereto, so that a radially inwardly curved passing gap for the moving material (12) is formed between the annular guide element (44) and the upper peripheral region of the wall (28; 96; 116; 134).

24. The apparatus of claim 23, **characterized in that** the annular guide element (44) is connected to the wall (28; 96; 116; 134) of the container (24; 92; 112; 132) by means of several guide blades (46), wherein the guide blades (46) are curved backwardly in rotation direction as seen from bottom to top.

25. The apparatus of claim 24, **characterized in that** a stationary closure ring (56) is arranged above the container (24; 92; 112; 132) extending radially inwardly from the edge (42) of the container and gliding on the edge (42) of the wall (28; 96; 116; 134).

26. The apparatus of anyone of claims 12 through 25, **characterized in that** a discharging device (74) is provided for discharging the container (24; 92; 112; 132) comprising an annular space (76) surrounding the container (24; 92; 112; 132) in which a chute (78) is arranged surrounding the container (24; 92; 112; 132) in helical manner, whose upper end is arranged in the region of the edge (42) of the wall (28; 96; 116; 134) of the container (24; 92; 112; 132).

27. The apparatus of claim 25 or 26, **characterized in that** the closure ring (56) closes the upper end of the chute (78).

28. The apparatus of claim 27, **characterized in that** the closure ring (56) can be displaced upwardly away from the edge (42) of the wall (28; 96; 116; 134) of the container (24; 92; 112; 132).

29. The apparatus of claim 28, **characterized in that** an inlet/outlet air valve (84), actuatable axially, is arranged in the annular space (76).

30. The apparatus of anyone of claims 13 through 29, **characterized in that** a ring collar (54) is arranged between the spraying device (60) and the return surface (52; 100), which is radially spaced from the spraying device (60).

## Revendications

1. Procédé de traitement d'un produit (12), en forme de particules, avec un agent d'enrobage, en particulier destiné à dragéifier ou pelliculer des comprimés pharmaceutiques ou alimentaires, dans lequel le produit (12) est introduit dans un conteneur (24 ; 92 ; 112 ; 132), est mis en mouvement dans le conteneur (24 ; 92 ; 112 ; 132) sous l'effet de la rotation du conteneur (24 ; 92 ; 112 ; 132) et est aspergé avec un agent d'enrobage et l'agent d'enrobage projeté est séché au moyen de l'air du processus, **caractérisé en ce que** le produit (12) est déplacé dans le conteneur (24 ; 92 ; 112 ; 132), pendant un mouvement de rotation continu, le long d'un fond (26 ; 94 ; 114 ; 138), à partir d'une zone définie par un diamètre intérieur vers une zone définie par un diamètre extérieur dans le conteneur (24 ; 92 ; 112 ; 132), à partir de là, le long d'une paroi verticale (28; 96; 116; 134) du conteneur (24; 92; 112 ; 132), d'une zone inférieure vers une zone supérieure du conteneur (24 ; 92; 112 ; 132), et à partir de là, le long d'une surface de retour inclinée (52 ; 100) pour revenir vers la zone définie par un diamètre intérieur dans le fond (26 ; 94 ; 114 ; 138).

2. Procédé selon la revendication 1, **caractérisé en ce que** l'agent d'enrobage est pulvérisé sur le produit (12) en mouvement, au moment où le produit (12) se répand de la surface de retour (52 ; 100) vers le fond (26 ; 94 ; 114 ; 138).

3. Procédé selon la revendication 1 ou 2, **caractérisé en ce que** l'agent d'enrobage est pulvérisé sur le produit (12), en forme de cercle orienté dans le sens radial vers l'extérieur.

4. Procédé selon l'une quelconque des revendications 1 à 3, **caractérisé en ce que** le produit (12) est mis en mouvement le long du fond (26 ; 94 ; 114 ; 138) avec une vitesse différente de celle du déplacement le long de la paroi (28 ; 96 ; 116 ; 134).

5. Procédé selon l'une quelconque des revendications 1 à 4, **caractérisé en ce que** l'air du processus est guidé à travers le produit (12) pendant que celui-ci est mis en mouvement le long du fond (26 ; 94).

6. Procédé selon la revendication 5, **caractérisé en ce que** l'air du processus est guidé à travers le produit (12) avec des composantes orientées dans le sens radial vers l'extérieur.

7. Procédé selon l'une quelconque des revendications 1 à 6, **caractérisé en ce que** l'air du processus est guidé à travers le produit (12) pendant que celui-ci est mis en mouvement le long de la paroi (28 ; 96 ; 116; 134).

8. Procédé selon l'une quelconque des revendications 1 à 4, **caractérisé en ce que** l'air du processus est guidé exclusivement à travers le produit (12) qui se déplace le long de la paroi (116 ; 134), sans que l'air du processus ne passe à travers le produit (12) mis en mouvement le long du fond (114 ; 138).

9. Procédé selon l'une quelconque des revendications 5 à 8, **caractérisé en ce que** l'air du processus est également guidé à travers le produit (12) qui circule le long de la surface de retour (52 ; 100).

10. Procédé selon la revendication 9, **caractérisé en ce que** l'air du processus est chauffé avant d'être guidé à travers le produit (12) qui retourne vers le fond (94).

11. Procédé selon l'une quelconque des revendications 1 à 10, **caractérisé en ce que** le produit (12) est évacué du traitement pendant le mouvement de rotation.

12. Dispositif de traitement d'un produit (12), en forme de particules, avec un agent d'enrobage, en particulier destiné à dragéifier ou pelliculer des comprimés pharmaceutiques ou alimentaires, en particulier destiné à la mise en oeuvre du procédé selon l'une quelconque des revendications 1 à 11, comprenant un conteneur (24 ; 92 ; 112 ; 132) pouvant être mis en rotation autour d'un axe de rotation (34), une unité de pulvérisation (60) destinée à pulvériser l'agent d'enrobage sur le produit (12), et une unité d'admission (66 ; 120) destinée à l'introduction de l'air du processus, **caractérisé en ce que** le conteneur (24 ; 92 ; 112 ; 132) comporte un fond (26 ; 94 ; 114 ; 138), et une paroi verticale (28 ; 96 ; 116 ; 134), **en ce que** l'axe de rotation (34) du conteneur (24 ; 92 ; 112 ; 132) est sensiblement en position verticale, et **en ce que** le conteneur (24 ; 92 ; 112 ; 132) comporte une surface de retour (52 ; 100) inclinée, qui s'étend depuis une partie supérieure du conteneur (24 ; 92 ; 112 ; 132) vers une partie définie par un diamètre intérieur dans le fond (26 ; 94 ; 114 ; 138).

13. Dispositif selon la revendication 12, **caractérisé en ce que** l'unité de pulvérisation (60) comporte au moins une buse de pulvérisation (64), qui est disposée dans une zone comprise entre une extrémité inférieure de la surface de retour (52 ; 100) et le fond (26 ; 94 ; 114 ; 138).

14. Dispositif selon la revendication 13, **caractérisé en ce que** la buse de pulvérisation (64) est une buse de pulvérisation (64), en particulier une buse mixte, qui projette le flux en forme de cercle dans le sens radial.

15. Dispositif selon l'une quelconque des revendications 12 à 14, **caractérisé en ce que** le fond (26 ; 138) du conteneur (24 ; 132) peut être écarté de la paroi (28 ; 134) et peut être mis en mouvement avec une vitesse de rotation indépendante de la vitesse de rotation de la paroi (28 ; 134).

16. Selon l'une quelconque des revendications 12 à 15, **caractérisé en ce que** l'unité d'admission (66) de l'air du processus comporte un canal d'admission (68), qui débouche en dessous du fond (26 ; 94), et **en ce que** le fond (26 ; 94) laisse passer l'air du processus dans sa zone définie par un diamètre intérieur et/ou sa zone définie par un diamètre extérieur.

17. Dispositif selon la revendication 16, **caractérisé en ce que** le fond (94) est formé par un agencement sensiblement concentrique de plusieurs anneaux (98) de diamètre différent superposés, les anneaux (98) respectivement contigus se chevauchant en partie avec un écart dans le sens vertical, et le diamètre des anneaux (98) diminuant du bas vers le haut.

18. Dispositif selon la revendication 16 ou 17, **caractérisé en ce que** la paroi (28; 116) laisse passer l'air du processus au moins dans sa partie inférieure.

19. Dispositif selon l'une quelconque des revendications 12 à 15, **caractérisé en ce que** l'unité d'admission (120) comporte un canal d'admission (114), qui débouche latéralement au fond (114), dans la zone de la paroi (116), la paroi (116) laissant passer l'air du processus dans cette zone.

20. Dispositif selon l'une quelconque des revendications 12 à 19, **caractérisé en ce que** la surface de retour (52 ; 100) laisse passer l'air du processus.

21. Dispositif selon la revendication 20, **caractérisé en ce qu'**un chauffage (102), destiné à chauffer l'air du processus, est monté en dessous de la surface de retour (100).

22. Dispositif selon l'une quelconque des revendications 12 à 21, **caractérisé en ce qu'**un bord supérieur (42) du conteneur (24 ; 92 ; 112 ; 132) est recourbé dans le sens radial vers l'intérieur.

23. Dispositif selon l'une quelconque des revendications 12 à 22, **caractérisé en ce qu'**à l'intérieur du conteneur (24 ; 92 ; 112 ; 132), dans la zone périphérique supérieure de celui-ci, est disposé un corps annulaire de guidage (44), qui est assemblé avec la paroi (28; 96; 116; 134) du conteneur (24 ; 92 ; 112 ; 132) à une distance radiale donnée de celle-ci, de telle sorte qu'il se forme entre le corps annulaire de guidage (44) et la zone périphérique supérieure de la paroi (28 ; 96 ; 116 ; 134) une fente formant une courbe dans le sens radial vers l'intérieur, dans laquelle passe le produit (12) en mouvement.

24. Dispositif selon la revendication 23, **caractérisé en ce que** le corps annulaire de guidage (44) est assemblé avec la paroi (28 ; 96 ; 116 ; 134) du conteneur (24 ; 92 ; 112 ; 132) au moyen de plusieurs pales de guidage (46), les pales de guidage (46) étant courbées vers l'arrière par référence au sens de rotation et du bas vers le haut.

25. Dispositif selon la revendication 24, **caractérisé en ce qu'**au-dessus du conteneur (24 ; 92 ; 112 ; 132) est monté un anneau de fermeture (56) fixe, qui s'engage au-dessus du bord supérieur (42) du conteneur dans le sens radial vers l'intérieur et suit le contour du bord (42) de la paroi (28 ; 96 ; 116; 134).

26. Dispositif selon l'une quelconque des revendications 12 à 25, **caractérisé en ce qu'**il est prévu une unité de vidage (74) destinée à vider le conteneur (24 ; 92 ; 112 ; 132) et qui comporte une chambre annulaire (76) qui entoure le conteneur (24 ; 92 ; 112 ; 132) et dans laquelle est disposée une goulotte (78) de forme hélicoïdale, qui entoure le conteneur (24; 92; 112 ; 132) et dont l'extrémité supérieure est disposée dans la zone du bord supérieur (42) de la paroi (28; 96; 116; 134) du conteneur (24; 92; 112 ; 132).

27. Dispositif selon les revendications 25 et 26, **caractérisé en ce que** l'anneau de fermeture (56) obture l'extrémité supérieure de la goulotte (78).

28. Dispositif selon la revendication 27, **caractérisé en ce que** l'anneau de fermeture (56) peut être écarté du bord (42) de la paroi (28 ; 96 ; 116 ; 134) du conteneur (24 ; 92 ; 112 ; 132) en étant guidé vers le haut.

29. Dispositif selon la revendication 28, **caractérisé en ce qu'**une vanne (84) d'admission et d'évacuation d'air, pouvant être actionnée dans le sens axial, est montée contre la chambre annulaire (76).

30. Dispositif selon l'une quelconque des revendications 13 à 29, **caractérisé en ce qu'**entre l'unité de pulvérisation (60) et la surface de retour (52 ; 100) est disposée une collerette annulaire (54), qui est située à une distance radiale donnée de l'unité de pulvérisation (60).
